Europäisches Patentamt

**European Patent Office**

**Office européen des brevets**

(19)

(11) Numéro de publication: **0 018 904**

**A1**

(12) **DEMANDE DE BREVET EUROPEEN**

(21) Numéro de dépôt: **80400578.3**

(22) Date de dépôt: **25.04.80**

(51) Int. Cl.³: **H 02 K 29/02**

(30) Priorité: **26.04.79 FR 7910978**

(43) Date de publication de la demande:
**12.11.80 Bulletin 80/23**

(84) Etats Contractants Désignés:
**AT BE CH DE FR GB IT LI LU NL SE**

(71) Demandeur: **CROUZET**
**128, Avenue de la République**
**F-75011 Paris(FR)**

(72) Inventeur: **Vergues, Jacques**
**10 rue Couperin**
**F-26000 Valence(FR)**

(74) Mandataire: **Bloch, Robert et al,**
**Cabinet ROBERT BLOCH 39 avenue de Friedland**
**F-75008 Paris(FR)**

(54) **Moteur à courant continu sans collecteur.**

(57) Moteur à courant continu sans collecteur, notamment pour motoventilateurs, comprenant un rotor (2, 3) extérieur, un stator (6), comportant, chacun, deux bipôles (36, 38 - 35, 37 et 23, 33 - 24, 34), un seul et unique bobinage (7) pour créer les pôles (23, 33 - 24, 34) du stator (6), un transistor de commutation (60, 63) pour contrôler l'alimentation du bobinage (7), un capteur (60, 61) de position du rotor (2, 3) pour commander le transistor (60, 63) et des aimants de rappel (15) sur les pôles (23, 33) du stator (6). Les paires de pôles du stator (6) sont créées lorsque les pôles (36, 38) du rotor (2, 3) passent devant le capteur (60, 61).

FIG.2

EP 0 018 904 A1

Croydon Printing Company Ltd.

1

## Moteur à courant continu sans collecteur.

La présente invention concerne un moteur à courant continu sans collecteur, notamment pour motoventilateurs destinés au refroidissement d'équipements électroniques alimentés par batterie.

On connaît déjà des motoventilateurs à moteur asynchrone monophasé associé à un convertisseur statique. Le fonctionnement de ces ventilateurs, grâce à l'absence de balais, offre une bonne sécurité. Toutefois, leur rendement est mauvais et leur fabrication est complexe.

On connaît aussi des motoventilateurs à moteur à courant continu sans collecteur, ou à commutation électronique.

Certains d'entre eux possèdent un moteur synchrone triphasé, commuté par un carrousel de trois circuits temporisateurs monostables transistorisés. Leur performance est bonne, mais ils sont encombrants et d'un prix de revient élevé, le moteur faisant saillie à l'arrière du ventilateur et l'ensemble électronique étant placé dans un boîtier séparé.

D'autres sont plus compacts, sans d'ailleurs que leur performances ne soit diminuée par rapport aux premiers. Il s'agit de motoventilateurs dont le moteur possède un rotor extérieur, comprenant un ruban de caoutchouc magnétique comme aimant, et un stator à deux pôles, formé de tôles empilées. Le moteur possède deux bobines et l'ensemble électronique comporte donc deux circuits de commutation.
Toutefois, le coût de revient de tels motoventilateurs
reste élevé.

La présente invention vise à procurer un moteur, notamment
de motoventilateur, alimentable directement par batterie,
ne nécessitant pas la production de courant alternatif,
comme un moteur asynchrone, mais dont la sécurité de fonctionnement soit aussi grande que celle d'un moteur asynchrone, dont le rendement soit celui d'un moteur à courant
continu, et dont le prix de revient soit tel qu'un motoventilateur incorporant l'invention ne coûterait pratiquement
pas plus cher que le seul moteur asynchrone des motoventilateurs classiques.

A cet effet, la présente invention concerne un moteur à
courant continu sans collecteur, notamment pour motoventilateurs, comprenant un rotor extérieur sur lequel on a aimanté au moins un bipôle, un stator intérieur au moins bipolaire, des moyens associés aux pôles du stator pour créer,
au niveau de ces pôles, au moins une paire de pôles opposés de même nom, et des moyens de commutation agencés pour
contrôler les moyens de création de la paire de pôles opposés de même nom, caractérisé par le fait que les moyens
de création de la paire de pôles opposés de même nom du
stator comportent un seul et unique bobinage à deux bornes,
que les moyens de commutation ne comportent qu'une seule
voie de contrôle du bobinage unique, et qu'il est prévu un
capteur de position du rotor pour commander la voie de commutation de manière que la paire de pôles de même nom du
stator ne soit créée que lorsque ces pôles se trouvent en
face de pôles de même nom du rotor, et des moyens de rappel associés aux pôles du stator pour poursuivre l'entraînement du rotor lorsque les pôles du stator ne se trouvent
pas en face de pôles de même nom du rotor.

Grâce à l'unique bobinage, aux moyens de rappel, à l'unique
voie de commutation, on obtient un moteur permettant de résoudre le problème qui est à l'origine de la présente invention et énoncé ci-dessus.

Dans une forme de réalisation préférée du moteur de l'invention, le rotor et le stator comportent, chacun, deux bipôles et le capteur de position est agencé pour commander la voie de commutation de manière à créer dans le stator une paire de pôles Sud opposés et une paire de pôles Nord opposés lorsque les pôles d'un même nom du rotor passent devant le capteur.

L'invention sera mieux comprise à l'aide de la description suivante d'une forme de réalisation préférée du moteur de l'invention, en référence au dessin annexé, sur lequel :
- la figure 1 est une vue en coupe axiale du moteur de l'invention ;
- la figure 2 est une vue en plan du moteur de la figure 1 ;
- les figures 3a et 3b représentent des courbes représentatives des différents couples d'entraînement du moteur ;
- la figure 4 est un schéma électronique de la voie de commutation du moteur de l'invention ; et
- les figures 5a, 5b et 5c représentent les différents signaux de contrôle apparaissant dans le circuit de commutation de la figure 4.

Le motoventilateur représenté sur le dessin comporte une hélice 1, montée sur un capot 2, de préférence en acier doux, embouti en forme de coupelle, le capot 2 étant solidaire d'un moyeu 4 fixé à un pivot 5. Une bande de caoutchouc magnétique 3, sur laquelle on a aimanté, par exemple, deux paires de pôles, est disposée, ou roulée, à l'intérieur du capot 2 pour former, avec celui-ci, un rotor de moteur. Le motoventilateur comporte encore, à l'intérieur du rotor (2,3), un stator 6 par exemple en ferrite douce ou en tôles feuilletées, par exemple de silicium, fixé à un châssis 12, support du ventilateur, par l'intermédiaire

4

0018904

d'entretoises 11. Le pivot 5 est monté sur une partie centrale du châssis 12 par des coussinets, ou roulements à billes, 13. Le stator 6 possède quatre pôles, le rotor 2 possédant deux paires de pôles, autour desquels, et avec interposition d'un revêtement d'isolation, sont disposées respectivement quatre bobines 7 raccordées en série. La forme du stator est de préférence telle que le bobinage puisse être réalisé sur une machine automatique permettant déjà de bobiner les rotors de moteurs à courant continu.

Les entretoises 11 portent une plaquette de circuit imprimé 9, fixée par ailleurs au châssis 12 par des écrous de fixation 16. Le circuit imprimé 9 porte un ensemble électronique 10, dont il sera question ci-après. Les pôles du stator 6 ménagent, entre ce stator et le rotor (2,3), quatre entrefers 14. Les entrefers 14, correspondant à deux pôles du stator de même nom, par exemple Nord, c'est-à-dire les pôles 24 et 34, sont décroissants dans le sens de rotation du rotor 3, illustré par une flèche 25. Les deux autres pôles opposés 23 et 33 du stator 6, dissymétriques, sont échancrés, et possèdent dans leur échancrure, chacun, un aimant permanent 15, dont l'aimantation est opposée à celle qui est engendrée dans ces pôles par l'excitation des bobines 7, comme on le verra ci-après. L'épaisseur de ces aimants 15/est voisine de celle de la bande magnétique 3 du rotor, de façon qu'ils ne soient pas désaimantés par le rotor pendant le passage des pôles en opposition. L'échancrure dans laquelle est placé un aimant 15 est limitée par un talon 17, permettant le passage du flux magnétique créé par le bobinage 7 à côté de l'aimant 15, et évitant la désaimantation de celui-ci. Cet agencement correspond à un stator en ferrite. Dans le cas d'un stator feuilleté, les quatre entrefers ménagés entre les pôles du stator et le rotor extérieur sont tous décroissants dans le sens de rotation du rotor.

L'ensemble électronique de commutation 10, porté par le circuit imprimé 9, comporte essentiellement un premier circuit intégré de commutation 60 et un deuxième circuit intégré amplificateur 70.

Le circuit intégré 60 comporte un générateur à effet Hall 61, un amplificateur différentiel 62, raccordé au générateur 61, des moyens de déclenchement, ou trigger, 67 raccordés à la sortie de l'amplificateur 62, et un transistor de sortie (collecteur ouvert) 63.

Le générateur à effet Hall 61, sensible au champ magnétique, est destiné à détecter la position du rotor 3. Il est disposé sur la plaquette 9 en un endroit où il n'est pas influencé par le champ statorique.

Le transistor de sortie 63 du circuit 60 commande, par l'intermédiaire d'un pont diviseur à résistances 81, 82, 83, le circuit amplificateur 70. Ce circuit 70 comporte deux transistors raccordés selon un montage de Darlington. Le circuit amplificateur 70 est attaqué par le transistor de commutation 63 par l'intermédiaire d'un condensateur 71, jouant le rôle de filtre dérivateur destiné à annuler le courant en cas de blocage du rotor 3. Un circuit intégrateur aux bornes du circuit 70, comprenant une résistance 72 et un condensateur 73, permet, au moment de la coupure du courant, c'est-à-dire au moment de la commutation, de ralentir cette coupure pour éviter une surtension dans le circuit intégré 70. En d'autres termes, le circuit intégrateur 72, 73 réduit la vitesse de commutation pour réduire les surtensions à la coupure.

Les quatre bobines 7, raccordées en série, sont raccordées à la sortie du circuit d'amplification 70, et à une batterie 74, par sa borne négative. Un indicateur 75 de rotation du rotor 3 est branché aux bornes du bobinage 7, par exemple par l'intermédiaire d'une diode et d'une résistance.

Un condensateur 76 est branché aux bornes de la batterie 74, par l'intermédiaire d'une diode 77. La diode 77 est une sécurité en cas d'inversion du sens d'alimentation et le con-

6

0018904

densateur 76 est prévu pour éliminer les surtensions et les parasites qui pourraient être injectés dans la ligne d'alimentation.

On remarquera également qu'il a été prévu une diode Zener 64, aux bornes du circuit de commutation 60, pour limiter la tension, et une résistance 65, pour limiter le courant dans la diode 64.

Nous avons vu plus haut que deux paires de pôles avaient été aimantées sur le rotor 3, ces pôles étant, le long de la circonférence du rotor, alternativement Nord (35, 37) et Sud (36, 38). L'excitation du bobinage, c'est-à-dire des bobines 7, fera apparaître, sur le stator 6, au niveau de ses quatre saillies polaires, deux pôles Nord opposés 24, 34 et deux pôles Sud opposés 23, 33, comme il a déjà été dit plus haut. Les aimants 15, conformément encore à la description ci-dessus, sont des pôles Nord, disposés sur des saillies du stator qui, lorsque le bobinage sera excité, deviendront des pôles Sud.

Les aimants 15 ont, avant toute excitation du bobinage, c'est-à-dire au repos, positionné le rotor 3 de façon que les pôles Nord (35, 37) et Sud (36, 38) du rotor soient respectivement en face des pôles Nord (24, 34) et Sud (23, 33) qui seront créés dans le stator 6, lorsque le bobinage 7 sera excité, et légèrement en avance sur ces derniers dans le sens de rotation 25, pour des raisons qui seront abordées ultérieurement.

Le générateur de Hall 61, soumis à l'action du champ rotorique, est disposé sur la plaquette 9 de manière à créer un courant et autoriser l'alimentation de l'enroulement statorique 7, lorsqu'un pôle Sud (36, 38) du rotor passe devant lui. Il faut noter qu'on aurait pu prévoir qu'il en soit ainsi lorsque c'est un pôle Nord du rotor qui passe devant le générateur de Hall. Le courant créé par le circuit intégré 60 est amplifié par le deuxième circuit inté-

gré 70 qui va ainsi permettre d'alimenter le bobinage 7, ce qui crée un pôle Sud (23, 33) dans la portion en saillie du stator située alors en face du pôle Sud 36 du rotor en question et associé au générateur 61, ainsi que dans la portion en saillie opposée.

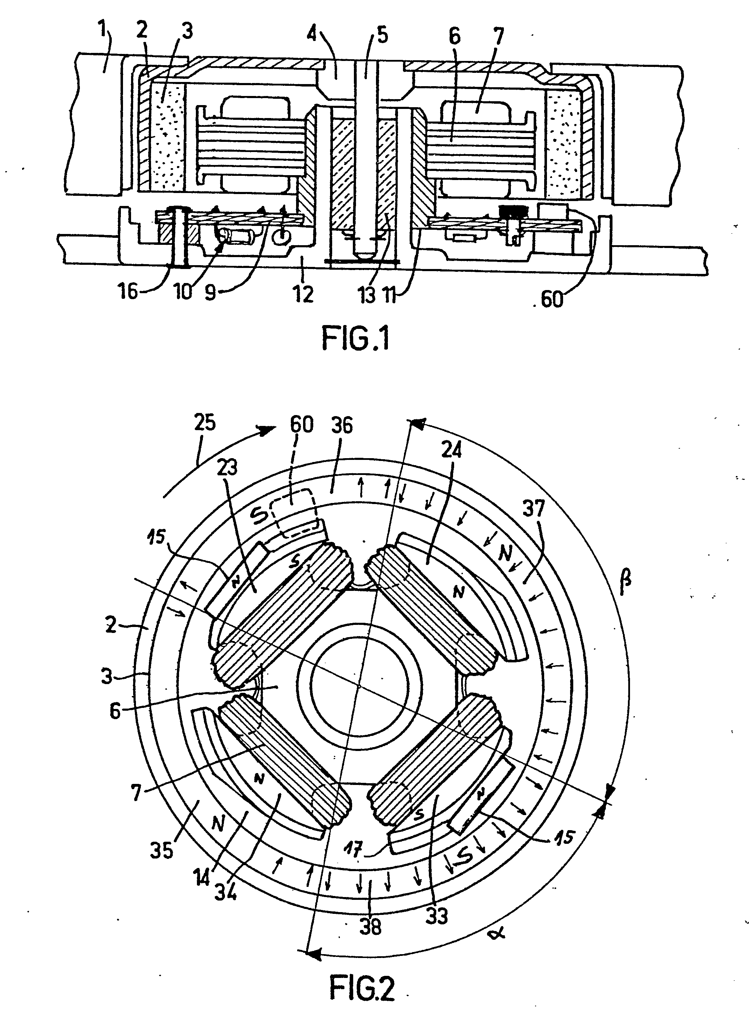

A la mise sous tension, les pôles Sud ainsi créés dans le stator, en face des pôles Sud du rotor, repoussent le rotor dans le sens de la flèche 25. La position de démarrage du rotor est illustrée sur la figure 2. Cet entraînement se poursuit jusqu'à ce qu'un pôle Nord (35, 37) arrive en face du même pôle Sud (23, 33) du stator, associé au générateur 61, et que la commutation ait lieu. Dans ces conditions, le moteur n'est actionné que pendant sensiblement un quart de tour sur deux, lorsque les pôles Sud (36, 38) du rotor sont en face du générateur 61. La continuité de l'entraînement du rotor (2, 3) est assurée, d'une part, par les aimants de rappel 15 qui, lorsqu'un pôle Nord du rotor arrive en face du générateur de Hall 61, et que les deux pôles Nord du rotor arrivent donc également en face de ces aimants de rappel, continuent de repousser le rotor, grâce à leur aimantation de même signe que celle de ces pôles du rotor et, d'autre part, par un couple dû aux variations de reluctance  engendrées par l'ensemble des variations d'entrefers entre le stator 6 et le rotor 3. Il faut noter ici qu'on pourrait remplacer les aimants de rappel 15 par des systèmes à came beaucoup plus complexes.

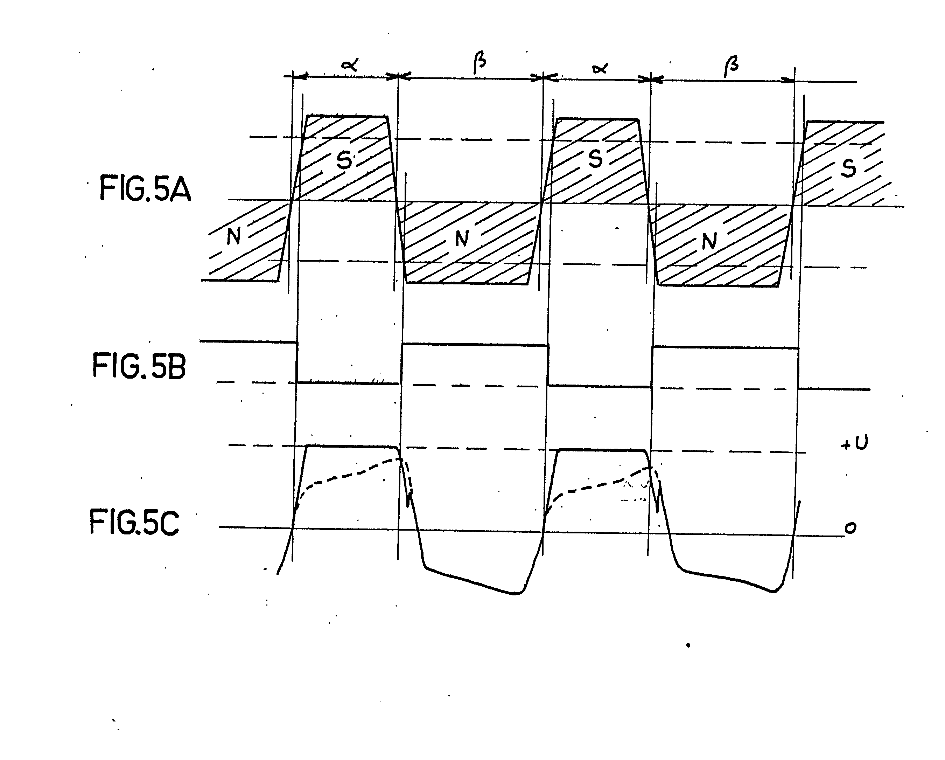

C'est le générateur à effet Hall, et plus généralement le premier circuit intégré 60, qui pilote donc la commutation statique du moteur. Lorsque l'induction à laquelle est soumise le générateur 61 (courbe de la figure 5A) augmente, la tension de sortie de l'amplificateur 62 augmente également, et inversement. Cette tension, par l'intermédiaire du trigger 67, commande le transistor 63 qui, selon que le niveau du signal de commande ait dépassé le seuil haut de commutation sans atteindre le seuil bas ou ait dépassé le seuil bas sans atteindre le seuil haut, représentés en traits mixtes sur la figure 5A, est soit saturé, ou conducteur, soit bloqué (courbe de la figure 5B). Cette courbe 5B illustre la tension à la sortie du transistor 63, entre les deux résistances 81 et 82. Dans l'exemple représenté, les seuils de commutation du transistor 63 correspondent à des inductions Sud et Nord de 350 gauss environ.

Le circuit intégré 70 est commandé par le circuit 60. Son gain en courant, dans cet exemple décrit et représenté, est de 1000 environ. Comme on l'a déjà vu, ce transistor de Darlington 70 est monté en amplificateur intégrateur sur le bobinage 7 du moteur, le condensateur 73 étant le condensateur d'intégration, pour contrôler la vitesse de commutation et réduire les surtensions à la coupure.

Le signal de sortie du circuit intégré 70, appliqué aux bornes du bobinage 7, est illustré sur la figure 5C. Il s'agit de la force contre-électromotrice du moteur, à laquelle est superposée la tension d'alimentation U, et qui sera abordée encore ultérieurement. Le transistor de Darlington 70 conduit lorsqu'un pôle Sud (36, 38) du rotor 3 est en face du circuit intégré 60.

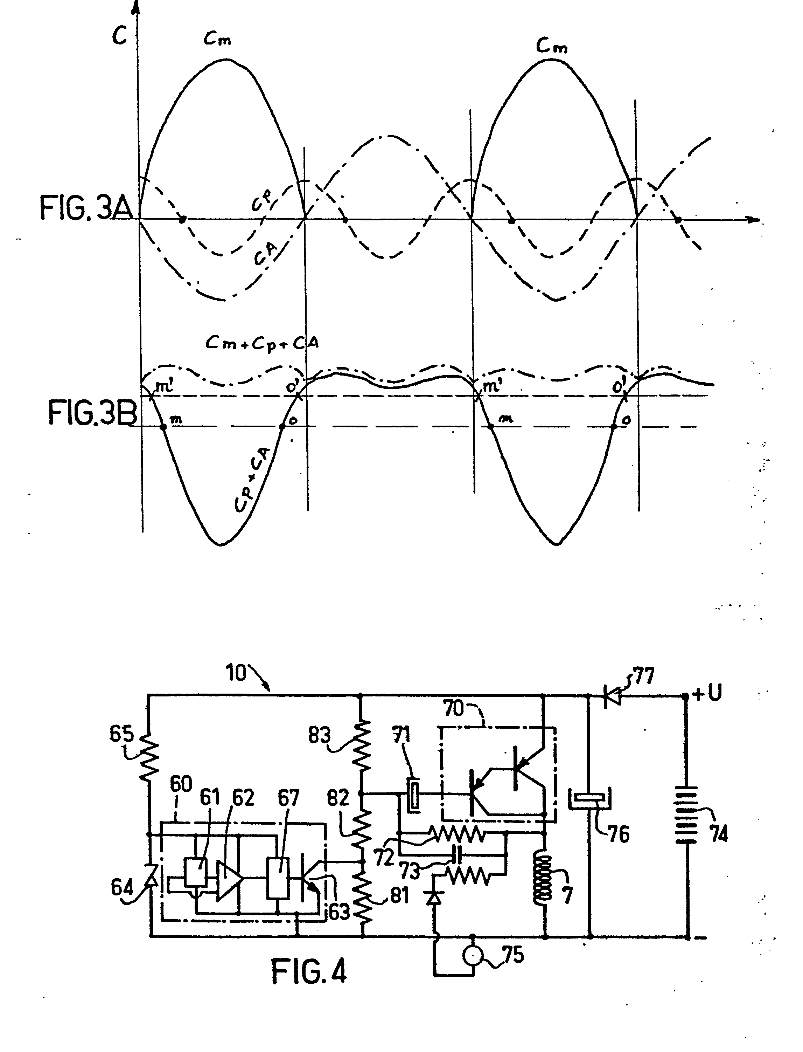

La courbe représentative du couple d'entraînement Cm du moteur, en fonction de l'angle, et illustrée sur la figure 3A en trait plein, comporte des alternances positives qui correspondent aux entraînements successifs du moteur. Ces alternances s'étendent sur un quart de tour et sont espacées également d'un quart de tour. La courbe représentative du couple de rappel Ca, dû aux aimants 15, en fonction de l'angle, et illustrée sur la figure 3A en trait mixte, est une sinusoïde dont la période s'étend sur deux quarts de tour et dont les alternances négatives correspondent aux alternances du couple d'entraînement. La courbe représentative du couple Cp, dû aux variations de réluctance, en fonction de l'angle, et illustré sur la figure 3A en trait interrompu, est une sinusoïde dont la période s'étend aussi sur deux quarts de tour mais qui est décalée, comme on le verra ci-après, par rapport à la courbe du couple de rappel Ca.

La courbe représentative du couple résultant (Cm + Ca + Cp), en fonction de l'angle, est illustrée sur la figure 3B en trait mixte. Ce couple résultant est remarquable en ce qu'il est pratiquement constant.

A l'arrêt, c'est-à-dire lorsque le couple d'entraînement Cm est nul, le couple résultant (Ca + Cp), en fonction de l'angle, est illustré par la courbe en trait continu de la figure 3B.

En l'absence de frottement, on constate que, sur une période de ce couple résultant, il existe deux points d'équilibre, un point m stable et un point O, instable. Cex deux points sont situés dans les zones d'entraînement du moteur. Avec des frottements, dont la droite représentative du couple, décalée vers le haut par rapport à l'axe des abscisses, est représentée en trait /interrompu ─── sur la figure 3B, on constate que les points d'équilibre m' stable et O' instable, intersection de la courbe du couple résultant (Cp + Ca) et de la courbe du couple résistant de frottement, restent dans les zones d'entraînement du moteur. Dans la mesure où ce couple résistant est inférieur au minimum du couple résultant d'entraînement du moteur (Cm + Ca + Cp), il est donc possible de faire démarrer le moteur.

Le couple Cm est fonction de l'intensité du courant traversant le bobinage 7. Lorsque la tension d'alimentation est constante, ce couple Cm varie de façon inversement proportionnelle avec la vitesse de rotation, comme le couple d'un moteur à courant continu à excitation constante. En d'autres termes,
- à la vitesse limite, c'est-à-dire à vide, la force contre-électromotrice développée aux bornes du bobinage 7 est égale à la tension d'alimentation, et l'intensité tend vers zéro, tout comme le couple ;

- au blocage, c'est-à-dire au démarrage, l'intensité est maximale et le couple également.

Toujours comme dans le cas d'un moteur à courant continu, le régime de puissance maximale est atteint pour une vitesse égale à environ la moitié de la vitesse limite. A cette vitesse de puissance maximale, le couple est égal à la moitié du couple de blocage.

Pour obtenir un couple résultant d'entraînement/ les amplitudes des couples Cm, Ca et Cp doivent, de préférence, satisfaire les relations suivantes :

$$Cm \ = \ 2\ Ca \ = \ 4\ Cp \ .$$

Dans la mesure où le couple Cm varie avec le régime du moteur, il est nécessaire de choisir le régime pour lequel le couple résultant d'entraînement reste constant. Trois solutions sont possibles :

1. Ce couple résultant est constant dans les conditions de blocage ;

2. Ce couple résultant est constant au régime de puissance maximale ;

3. Ce couple résultant est constant dans les conditions de vitesse limite.

La troisième solution est appropriée pour l'entraînement d'un ventilateur caractérisé par un couple résistant faible au démarrage et un moment d'inertie important qui stabilise la vitesse. En outre, lorsque cette troisième solution est adoptée, le moteur peut être démarré en sous-tension. Cela est intéressant s'il s'agit d'un motoventilateur qui doit démarrer à une tension égale à la moitié de sa tension nominale.

En revenant à la structure même du moteur qui vient d'être décrit, avec son fonctionnement, on rappelera que les deux pôles 24 et 34 du stator 6 ménagent entre eux et le rotor 3 des entrefers décroissants dans le sens de rotation du rotor. Cette conformation du stator permet de décaler la position de repos des pôles du rotor par rapport aux pôles du stator, dans le sens de la rotation du rotor, par exemple de 20° électriques environ. Si le couple dû aux variations de reluctance est engendré par l'ensemble des variations d'entrefers entre le stator et le rotor, c'est cette décroissance d'entrefers au niveau des deux pôles du stator en question, c'est-à-dire la pente de ces pôles, qui permet de caler convenablement ce couple, et d'obtenir par conséquent un couple résultant d'entraînement sensiblement constant.

Dans la forme de réalisation préférée du moteur décrit ci-dessus, les pôles du rotor 6 ont une forme trapézoïdale, vue latéralement, de manière que la zone des pôles Sud à laquelle est associé le générateur à effet Hall 61, par exemple la zone inférieure des pôles, soit plus étroite angulairement que la zone supérieure. Au niveau de ce générateur 61, sont donc disposés alternativement des pôles Sud et des pôles Nord plus larges que les pôles Sud. En effet, comme ce sont les pôles Sud qui commandent le passage du courant, il est avantageux que les angles de conduction soient inférieurs au demi-pas polaire, qui correspond à une demi-période de la force contre-électromotrice (figure 5B), pour que la tension d'alimentation ne soit pas appliquée sur le bobinage 7 quand cette force est nulle, afin d'éviter des surintensités et des pertes de rendement. C'est ce qui est illustré par la courbe de la figure 5C, représentative de cette force contre-électromotrice. Néanmoins, le flux étant conservatif, il est nécessaire que la surface latérale d'un pôle Sud soit égale à celle d'un pôle Nord. Dans l'exemple représenté, le développement angulaire α de la partie utile des pôles Sud du rotor est donc sensiblement inférieur au développement correspondant β des pôles Nord, la somme des deux restant égale à 180° (figure 2).

On a précisé plus haut que le rotor, et donc le stator, était quadripolaire mais qu'il ne s'agissait que d'un exemple de réalisation. On peut en effet parfaitement prévoir un rotor ou un stator bipolaire, ou encore multipolaire, avec un nombre de bipôles supérieur à deux. L'essentiel est que les bobines du stator soient raccordées en série, ou que le bobinage, dans son ensemble, ne possède que deux bornes, et qu'en conséquence on ne dispose que d'une seule voie de commutation.

En ce qui concerne les aimants de rappel 15, qu'il y en ait deux ou quatre, dans le cas d'un moteur quadripolaire, ils peuvent être ceux d'une seule et unique rondelle circulaire quadripolaire.

Dans le cas où on utiliserait un générateur à effet Hall dont on ne connaîtrait pas avec précision les caractéristiques de fonctionnement, il serait intéressant de prévoir un petit aimant permanent, monté pivotant à côté de ce générateur, de manière à faire varier le champ magnétique autour de ce générateur et régler ainsi son seuil de déclenchement. Le réglage une fois réalisé, cet aimant permanent de réglage serait fixé en rotation.

Revendications

1.- Moteur à courant continu sans collecteur, notamment pour motoventilateurs, comprenant un rotor extérieur sur lequel on a aimanté au moins un bipôle, un stator intérieur au moins bipolaire, des moyens associés aux pôles du stator pour créer, au niveau de ces pôles, au moins une paire de pôles opposés de même nom, et des moyens de commutation agencés pour contrôler les moyens de création de la paire des pôles opposés de même nom, caractérisé par le fait que les moyens de création de la paire de pôles (23, 33) opposés de même nom du stator (6) comportent un seul et unique bobinage (7) à deux bornes, que les moyens de commutation ne comportent qu'une seule voie de contrôle (63,70) du bobinage unique (7), et qu'il est prévu un capteur (61) de position du rotor pour commander la voie de commutation (63, 70) de manière que la paire de pôles (23, 33) de même nom du stator (6) ne soit créée que lorsque ces pôles (23, 33) se trouvent en face de pôles (36, 38) de même nom/(2, 3) du rotor, et des moyens (15) de rappel associés aux pôles (23, 33) du stator (6) pour poursuivre l'entrainement du rotor (2,3) lorsque les pôles (23, 33) du stator (6) ne se trouvent pas en face de pôles (36, 38) de même nom du rotor (2, 3).

2.- Moteur selon la revendication 1 caractérisé par le fait que le rotor (2, 3) et le stator (6) comportent, chacun, deux bipôles (36, 38 - 35, 37 et 23, 33 - 24, 34) et le capteur de position (61) est agencé pour commander la voie de commutation (63, 70) de manière à créer dans le stator (6) une paire de pôles Sud (23, 33) opposés et une paire de pôles Nord (24, 34) opposés, lorsque les pôles d'un même nom du rotor (2, 3) passent devant le capteur (61).

3.- Moteur selon la revendication 2, caractérisé par le fait que le capteur (61) est disposé pour que les deux paires de pôles Nord (23, 34) et Sud (23, 33) du stator (6) soient créees lorsque les pôles Sud (36, 38) du rotor (2, 3) passent devant le capteur (61).

4.- Moteur selon l'une des revendications 1 à 3, caractérisé par le fait que le capteur (61) est un générateur à effet Hall.

5.- Moteur selon l'une des revendications 2 à 4, caractérisé par le fait que les moyens de rappel (15) sont associés aux deux pôles opposés du stator (6) devant lesquels le passage des pôles du rotor (2, 3) de même nom que celui de ces pôles du stator (6) provoque la commande de la voie de commutation (63, 70).

6.- Moteur selon l'une des revendications 1 à 5, caractérisé par le fait que le stator (6) est en ferrite et ses pôles (24, 34) non associés à des moyens de rappel (15) ménagent avec le rotor (2, 3) des entrefers (14) décroissants dans le sens de rotation du rotor (2, 3).

7.- Moteur selon l'une des revendications 1 à 5, caractérisé par le fait que le stator (6) est un stator feuilleté et tous ses pôles ménagent avec le rotor (2, 3) des entrefers décroissants dans le sens de rotation du rotor (2, 3).

8.- Moteur selon l'une des revendications 1 à 7, caractérisé par le fait que les moyens de rappel comprennent des aimants permanents (15) logés dans des échancrures des pôles (23, 33) correspondants du stator (6).

9.- Moteur selon la revendication 8, caractérisé par le fait que les aimants permanents (15) sont formés sur une rondelle circulaire.

10.- Moteur selon l'une des revendications 1 à 9, caractérisé par le fait que la voie de commutation (63, 70) comporte un seul transistor de commutation (63).

11.- Moteur selon la revendication 10, caractérisé par le fait qu'il comporte un circuit amplificateur (70) commandé par le transistor de commutation (63), agencé pour permettre l'alimentation du bobinage (7).

12.- Moteur selon la revendication 11, caractérisé par le fait que le circuit amplificateur (70) comporte deux transistors raccordés selon un montage de Darlington.

13.- Moteur selon l'une des revendications 1 à 12, caractérisé par le fait que les zones aimantées (36,38, 35, 37) du rotor (3) sont trapezoïdales.

14.- Moteur selon l'une des revendications 4 à 13, caractérisé par le fait qu'il est prévu un aimant permanent monté pivotant pour régler le seuil de déclenchement du générateur à effet Hall (61).

15.- Moteur selon l'une des revendications 1 à 12, caractérisé par le fait que le rotor (2, 3) est solidaire d'une hélice de ventilateur (1).

0018904

FIG.1

FIG.2

FIG.3A

FIG.3B

FIG.4

FIG.5A

FIG.5B

FIG.5C

3/3

0018904

Office européen
des brevets

Numero de la demande

EP 80 40 0578

**RAPPORT DE RECHERCHE EUROPEENNE**

| Catégorie | Citation du document avec indication. en cas de besoin, des parties pertinentes | Revendica-tion concernée |
|---|---|---|
| | DE - A - 2 260 069 (PAPST-MOTOREN)<br>* Page 13, lignes 11-31; page 14; page 15, lignes 1-19; page 16, lignes 21-32; pages 17,18; page 19, lignes 1-26; figures 4-7,9-12 *<br><br>-- | 1-8,10, 15 |
| | DE - A - 2 339 260 (PAPST-MOTOREN)<br>* Page 9, lignes 19-21; page 21, lignes 10-36; pages 22-25; figures 1,11-13 *<br><br>-- | 1,6-8, 10-12 |
| | FR - A - 1 516 085 (DE VALROGER et al.)<br>* Page 2, colonne de gauche, lignes 56-60; page 2, colonne de droite; page 3; page 4, colonne de gauche; page 4, colonne de droite, lignes 1-18; figures 1-6 *<br><br>-- | 1,2,8 10-12 |
| | FR - A - 2 269 232 (PAPST-MOTOREN)<br>* Page 3, lignes 8-15; page 7, lignes 28-31; page 11, lignes 37-39; page 12, lignes 1-3; figures 1-3,8 *<br><br>-- | 4,6,7, 11-13 |
| | FR - A - 2 315 190 (GUILDEN)<br>* Page 5, lignes 3-11; figures 1,2 *<br><br>-- | 5 |
| | FR - A - 2 126 011 (GENERAL<br>./. | 9 |

**DOCUMENTS CONSIDERES COMME PERTINENTS**

CLASSEMENT DE LA DEMANDE (Int. Cl ⁴)

H 03 K 29/02

DOMAINES TECHNIQUES RECHERCHES (Int. Cl. ⁴)

H 02 K 29/02
29/00
29/04

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille. document correspondant

X Le présent rapport de recherche a été établi pour toutes les revendications

| Lieu de la recherche | Date d'achèvement de la recherche | Examinateur |
|---|---|---|
| La Haye | 24-06-1980 | TIO |

OEB Form 1503.1  06.78

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | DYNAMICS)<br>* Page 5, lignes 29-40; page 6, lignes 1-16; figures 2,3 * | | |
| | GB - A - 1 127 065 (NATIONAL RESEARCH DEVELOPMENT CORP.)<br>* Page 3, lignes 88-104; figures 1,4 * | 14 | |
| P | DE - A - 2 835 210 (PAPST-MOTOREN)<br>* Page 12, lignes 28-33; page 13, lignes 1-5; figure 6 * | 2 | **DOMAINES TECHNIQUES RECHERCHES (Int. Cl. ³)** |

OEB Form 1503.2  06.78